# EUROPEAN PATENT APPLICATION

(11) **EP 0 612 940 A1**
(43) Date of publication of application: **31.08.1994**
(21) Application number: 94200281.7
(22) Date of filing: 03.02.1994
(51) Int. Cl.: F16H 61/14, F16H 61/20

(54) **Transmission control system**

(30) Priority: 26.02.1993 US 23414
(71) Applicant: GENERAL MOTORS CORPORATION, Detroit Michigan 48202 (US)
(72) Inventor: Vukovich, William Joseph, Ypsilanti, Michigan 48197 (US); Koenig, Melissa Mei, Ann Arbor, Michigan 48103 (US)
(74) Representative: Denton, Michael John

(57) **Abstract**

An electro-hydraulic control system in a power transmission has a neutral idle regulator valve (74) which controls the engagement pressure in a drive establishing device (76), a torque converter clutch control valve (46) for controlling the operating condition of a torque converter clutch (44), and a solenoid control valve (56) for controlling the distribution of a bias pressure. A shift valve (64) determines the distribution of the bias pressure to the neutral idle regulator valve, such that in a low forward ratio, the drive establishing device is controlled to a reduced torque capacity when certain vehicle parameters are present and to the torque converter clutch control valve when another forward ratio is established. The pressure level of the bias pressure is determined by an electronic control mechanism disposed within the vehicle. The engagement pressure of both the drive establishing device and the torque converter clutch is determined by the pressure output of the solenoid control valve.

## Description

This invention relates to a transmission control system for a transmission of a vehicle, and more particularly, to a transmission control system in a transmission having both a torque converter clutch and a neutral idle subsystem.

Transmissions that include both a torque converter clutch and a neutral idle control provide separate and distinct controls for each subsystem. This results in an increase in the number of solenoid control valves and complexity in the electrical control module. The torque converter clutch pressure is generally controlled to prevent clutch engagement at low throttle conditions. In neutral idle control systems, wherein a pressure operated friction device is controlled in a disengaged or slipping state to limit torque transfer, the engagement pressure is reduced at low throttle conditions when the vehicle is at rest.

As a general rule, the pressure control function of these subsystems is regulated by separate solenoid controlled valve mechanisms which will produce a variable signal pressure proportional to the voltage duty cycle imposed on the solenoid windings. Each subsystem has an assigned solenoid control valve mechanism to establish the engagement pressure therein.

The electronic control or digital computer of the electrical control module is operable to provide the necessary signals to the solenoid controlled valve mechanisms to provide the output pressure schedule desired.

A transmission control system in accordance with the present invention is characterised by the features specified in Claim 1.

The present invention uses a single solenoid controlled pressure regulator (preferably a variable bleed solenoid valve) to establish the control pressure function for both a torque converter clutch and a neutral idle regulator valve. The pressure output signal of the solenoid controlled pressure regulator is distributed by a shift valve which directs the pressure output signal to the neutral idle regulator valve in the low forward range and to the torque converter clutch in all other forward ranges. The solenoid controlled pressure regulator valve is controlled by an electronic control unit of the transmission to provide the desired output pressure for the valve mechanisms depending upon the operating state of the transmission. However, since the electronic or electrical output from the electronic control unit to the solenoid controlled pressure regulator is directed to a single valve mechanism, the control circuitry is somewhat reduced.

It is therefore an object of this invention to provide an improved transmission control system having a single pressure regulator structure for controlling both a neutral idle condition and the actuation of the torque converter clutch.

The present invention provides an improved transmission control system having a single pressure regulating source for establishing a pressure regulated signal for two distinct transmission operating conditions and a shift valve for directing the pressure signal to establish the desired operating condition in accordance with the vehicle operating parameters.

The present invention preferably provides an improved transmission control system, as set forth above, wherein an idle neutral regulator valve is in fluid communication with and responsive to the regulated pressure signal to substantially reduce the torque capacity of a low range fluid operated torque transmitting device when the vehicle throttle is substantially closed and the vehicle brakes are actuated. The present invention may also provide an improved transmission control system, as previously set forth, wherein a torque converter clutch regulator valve is in fluid communication with and responsive to the regulated pressure signal in all forward ranges except the low range.

The present invention will now be described, by way of example, with reference to the following description, and the accompanying drawings, in which:-
Figure 1 is a diagrammatic representation of a vehicle incorporating an engine transmission and drive mechanisms; and
Figure 2 is a schematic representation of a portion of a control mechanism for controlling the operation of the transmission in Figure 1 in accordance with the present invention.

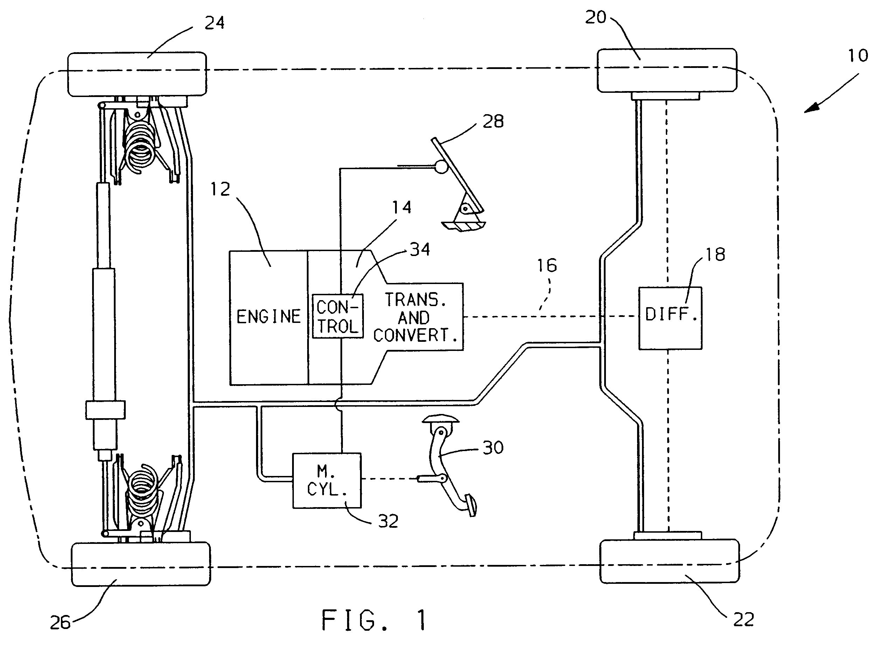

Referring to Figure 1, there is seen a vehicle, generally designated 10, which includes an engine 12, a power transmission 14 having an output shaft 16 adapted to drive a conventional differential 18. The differential 18 is drivingly connected to a pair of drive wheels 20 and 22. The vehicle 10 also includes a pair of steerable front wheels 24 and 26. The engine 12 is controlled by a conventional throttle system including a throttle pedal 28, which is effective to establish the fuel feed to the engine 12 to provide the desired torque output as requested by the operator. Vehicle retardation is controlled by a braking system including a conventional brake pedal 30 which is operable through a conventional master cylinder 32 to establish braking forces at each of the wheels 20 through 26.

The transmission 14, which incorporates a torque converter is preferably an electronically controlled unit, wherein the shift signals and pressure levels are controlled by a conventional digital computer which is programmed to provide the desired response and shift sequences within the transmission. Such devices are well known, such that a more detailed description is not considered necessary at this point, as those skilled in the art will be familiar with such devices. The transmission 14 and torque converter does receive input signals from both the braking system of the vehicle and the throttle system, as well as various speed signals from sensors provided in the vehicle.

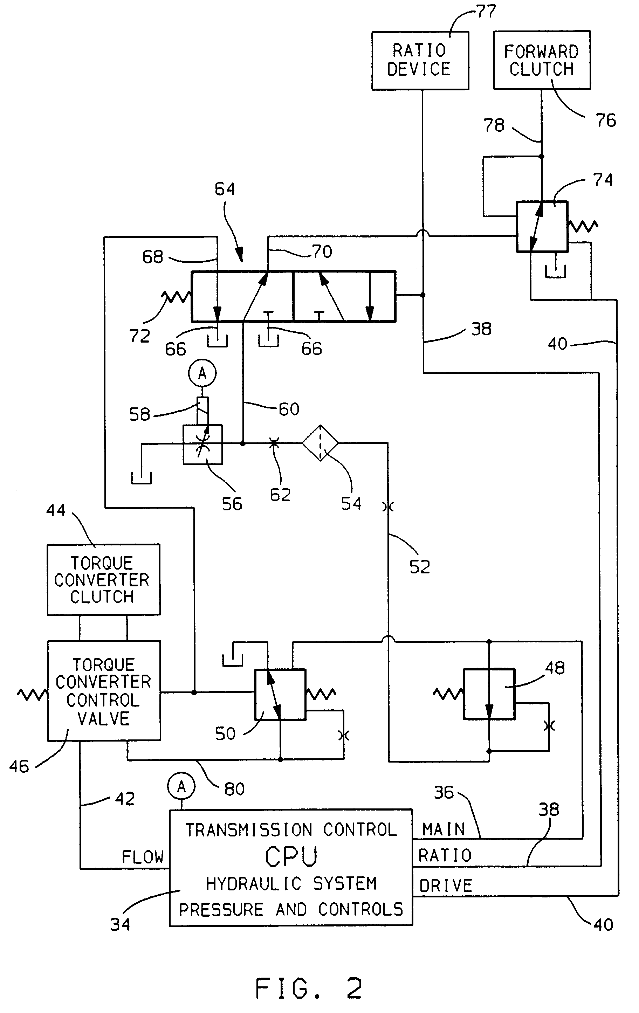

Referring to Figure 2, there is seen a control schematic representation of a transmission control 34 which includes a conventional hydraulic system, and a conventional programmable computer or CPU which is operable to provide mainline pressure in a passage 36, a ratio signal in passage 38 and a forward drive signal in passage 40, as well as other conventional operations. The hydraulic system also has a flow passage 42 which is effective to direct fluid to a conventional torque converter clutch 44 through a torque converter control valve 46.

As is well known, the torque converter can be operated to either provide a 1:1 ratio by engagement of a torque converter clutch 44, or a slipping torque transmission during disengagement of the torque converter clutch. The main passage 36 is connected to an actuator limit valve 48 and a torque converter clutch regulator valve 50. The actuator limit valve 48 is essentially a conventional downstream regulator valve, such that an output pressure in a passage 52 is controlled to be at a level reduced from the pressure generally present in main passage 36. As is well known, the main pressure in a transmission control 34 is a variable value dependant upon such parameters as vehicle speed, torque demand, the gear ratio in which the vehicle is operating and other parameters. However, it is desirable to provide a fixed maximum pressure level to various actuator valves throughout the system, and that is the purpose of the actuator limit valve 48.

The passage 52 is connected through a conventional filter 54 to a variable bleed solenoid valve 56. The variable bleed solenoid valve 56 has a conventional force motor regulator portion 58 which receives an electrical current signal from the transmission control 34 to provide for the opening and closing of a variable orifice within the variable bleed solenoid valve 56 which thereby control the pressure in a passage 60 disposed downstream of a fixed restriction 62.

The pressure in passage 52 is constant at the input to the restriction 62, while the variable bleed solenoid valve 56 will establish an output orifice which is variable and will therefore provide a pressure between zero and maximum in the passage 60. The passage 60 is connected to a shift valve 64 which has a pair of exhaust connections 66, a torque converter clutch output passage 68 and a neutral idle output passage 70. The shift valve 64 is biased in one direction by a spring 72 and is responsive to fluid pressure in the ratio passage 38 to move against the spring bias.

In the bias or spring set condition shown, the passage 60 is connected through the shift valve 64 to the neutral idle output passage 70 which presents a control pressure to a neutral idle regulator valve 74. The neutral idle regulator valve 74 receives input pressure from drive passage 40 and delivers pressure to a forward clutch 76.

The forward clutch 76 is a conventional fluid operated friction device within the transmission 14 which depends upon fluid pressure acting on a piston to control the torque transmitting capacity of the clutch. The neutral idle regulator valve 74 is a spring biased valve which is biased by a spring force and a pressure force to admit fluid from drive passage 40 to a clutch engagement passage 78. Fluid pressure in the clutch engagement passage 78 provides a feedback force to discontinue fluid feed from the drive passage 40.

When the neutral idle output passage 70 is connected to the shift valve 64, a second bias pressure is established at the neutral idle regulator valve 74. The pressure in neutral idle output passage 70 is, as previously explained, proportional to the setting of the variable bleed solenoid valve 56 and is therefore a variable bias pressure. When the throttle pedal 28 is released and the brake pedal 30 is depressed, the pressure in neutral idle output passage 70 will be at a maximum. This provides a maximum bias pressure on the neutral idle regulator valve 74 which establishes a significantly reduced output pressure resulting in slipping or disengagement of the forward clutch 76.

Thus, it is evident that when the vehicle is standing still, the brakes are actuated and the throttle pedal 28 is released, the forward clutch 76 will be reduced in torque transmission capacity such that less energy will be absorbed within the torque converter.

When the brakes are released and the throttle pedal 28 is depressed, the pressure in the neutral idle output passage 70 will reduce rapidly thereby permitting the neutral idle regulator valve 74 to permit maximum pressure to be distributed to the forward clutch 76 such that non-slipping operation will occur when a drive condition is desired by the operator.

When the parameters within the vehicle 10 determine that a higher speed ratio gear is desirable, the ratio passage 38 is energised or pressurised to enforce the engagement of a convention drive ratio establishing device 77, such as a clutch or brake. This device 77 will generally control the establishing of the second ratio. Also, the pressure in ratio passage 38 provides a bias pressure at the shift valve 64 urging the shift valve against the spring 72 to provide a connection between the passage 60 and the torque converter clutch output passage 68. At this time, the neutral idle output passage 70 is connected to the exhaust passage 66. When the torque converter clutch output passage 68 is pressurised, a bias force is imposed upon both the torque converter clutch regulator valve 50 and on the torque converter control valve 46. The torque converter control valve 46 will be shifted such that the fluid flow within the torque converter is such that the torque converter clutch 44 will be engaged thereby improving the operating efficiency of the torque converter. The torque converter control valve 46 is operable to shift at a minimum pressure level established in the passage 68. It has been found that approximately 138 kPa (20 psi) is a desirable level at which to shift the torque converter control valve 46 and establish a control pressure within a torque converter feed passage 80.

The torque converter regulator valve 50 is a normally closed valve which is opened by fluid pressure in the passage 68. The output flow of the torque converter regulator valve 50 is present in torque converter feed passage 80 and is also fed back to provide a bias pressure on the torque converter regulator valve 50. Thus, the torque converter regulator valve 50 is a downstream regulator which is biased open by one pressure and biased closed by another pressure to provide the desired control pressure function. The pressure in passage 68, during this period of operation, is equal to the pressure in passage 60, which as previously described, is established by the variable bleed solenoid valve 56.

The electronic portion of the transmission control 34 is effective in the first or lowest forward speed to provide a pressure schedule including maximum pressure output at the passage 60 when the throttle pedal 28 is released and the brake pedal 30 is depressed. The pressure characteristic desired during operation of the torque converter clutch 44 is such that minimum pressure is desired at closed throttle. As throttle opening increases due to depression of the throttle pedal 28, the pressure increases up to a predetermined value. At the shift point of the shift valve 64, the pressure in passage 60 is controlled to a minimum value and immediate engagement of the torque converter clutch 44 is not possible. The transmission control 34 will provide signals to the variable bleed solenoid valve 56 to establish a pressure schedule such that the pressure in passage 68 will be brought to the desired operating level dependent upon the vehicle parameters available for the transmission control 34. This will permit controlled engagement of the torque converter clutch 44.

It should be evident at this point that a single variable bleed solenoid valve is operable to establish both the neutral idle condition in the forward clutch, and the desired operating pressure in the torque converter clutch.

As pointed out in prior art systems, the mutually exclusive operation of these devices is controlled by distinct valve members, thereby requiring an increased number of variable pressure valve mechanisms in the control system. The use of a single variable bleed solenoid valve reduces the complexity of the valving operation and simplifies the operation.

The disclosures in United States patent application no. 023,414, from which this application claims priority, and in the abstract accompanying this application, are incorporated herein by reference.

## Claims

1. A transmission control system for a transmission (14) of a vehicle (10) having a braking system and a throttle system, the transmission control system comprising a torque converter clutch (44); a forward low ratio torque transmitting means (76); a ratio drive establishing means (77) which is selectively operable; a hydraulic control comprising a neutral idle regulator valve (74) for controlling an engagement pressure of the forward low ratio torque transmitting means (76) at a first pressure schedule level when indicated as required by signals from the throttle system and the braking system and at a second pressure schedule level when the ratio drive establishing means is operated; a shift valve (64) for directing control fluid pressure from a controlled source (34) to the neutral idle regulator valve when the ratio drive establishing means is not operated and to a torque converter clutch control means (46) when the ratio drive establishing means is operated; and a solenoid controlled pressure regulator (56) for controlling the control fluid pressure directed by the shift valve in response to signals from the throttle system and the braking system.

2. A transmission control system as claimed in Claim 1, wherein the forward low ratio torque transmitting means (76) is a clutch.

3. A transmission control system as claimed in Claim 1 or Claim 2, wherein the solenoid controlled pressure regulator (56) selectively controls the pressure from the controlled source (34) at the first and second pressure schedule levels to the shift valve (64) in response to predetermined vehicle operating parameters including signals from the throttle system and the braking system.

4. A transmission control system as claimed in any one of Claims 1 to 3, wherein the solenoid controlled pressure regulator is a variable bleed solenoid valve (56).

5. A transmission control system as claimed in any one of Claims 1 to 4, wherein the engagement pressure in the first pressure schedule is lower than the enagagement pressure in the second pressure schedule.
